# EUROPEAN PATENT APPLICATION

(11) **EP 4 202 912 A1**
(43) Date of publication of application: **28.06.2023**
(21) Application number: 22215777.8
(22) Date of filing: 22.12.2022
(51) Int. Cl.: G09G 5/00, G06F 3/14

(54) **IMAGE PROCESSING METHOD AND APPARATUS FOR VIRTUAL REALITY DEVICE, AND VIRTUAL REALITY DEVICE**

(30) Priority: 22.12.2021 CN 202111582600
(71) Applicant: Pimax Technology (Shanghai) Co., Ltd, Shanghai 200120 (CN)
(72) Inventor: Weng, Zhibin, Shanghai, 200120 (CN); Zhou, Ke, Shanghai, 200120 (CN)
(74) Representative: Murgitroyd & Company

(57) **Abstract**

Disclosed relates to the field of data transmission technologies, and specifically, to an image processing method and apparatus for a virtual reality device, and a virtual reality device. The image processing method for a virtual reality device includes: receiving, by a HDMI, a video signal capable of being received by a HDMI; converting the video signal capable of being received by the HDMI into a video signal capable of being received by a CSI; and performing at least one of asynchronous timewarp processing and asynchronous spacewarp processing on the video signal capable of being received by the CSI, to generate a video signal capable of being received by a DSI. Based on the image processing method, a displayed image of the virtual reality device has a high display frame rate.

## Description

### TECHNICAL FIELD

The present application relates to the field of data transmission technologies, in particular to an image processing method and apparatus for a virtual reality device, and a virtual reality device.

### BACKGROUND

Currently, in an application of data transmission between a virtual reality product and a personal computer (PC) terminal, the PC terminal usually needs to compress video and audio data and then outputs compressed video and audio data to a display unit of the virtual reality product for display, thereby causing a loss of a transmit signal on the PC terminal and incomplete transmitted data. Consequently, definition of an image displayed by the virtual reality product is low and display of the image is delayed, resulting in poor user experience.

### SUMMARY

In view of this, the present application provides an image processing method and apparatus for a virtual reality device, and a virtual reality device, to resolve or improve technical problems that definition of an image displayed by a virtual reality product is low and display of the image is delayed because a transmit signal on a PC terminal is easily lost and transmitted data is incomplete when the data is transmitted between the virtual reality product and the PC terminal.

The present application provides an image processing method for a virtual reality device. The image processing method for a virtual reality device includes: receiving, by a HDMI, a video signal capable of being received by a HDMI; converting the video signal capable of being received by the HDMI into a video signal capable of being received by a CSI; and performing at least one of asynchronous timewarp processing and asynchronous spacewarp processing on the video signal capable of being received by the CSI, to generate a video signal capable of being received by a DSI.

In an embodiment, the performing at least one of asynchronous timewarp processing and asynchronous spacewarp processing on the video signal capable of being received by the CSI, to generate a video signal capable of being received by a DSI includes: performing the asynchronous timewarp processing on the video signal capable of being received by the CSI, to generate the video signal capable of being received by the DSI; and the performing the asynchronous timewarp processing on the video signal capable of being received by the CSI, to generate the video signal capable of being received by the DSI includes: obtaining image content information of a scene in a rendering frame; performing single-depth approximation processing on a pixel value of the image content information of the scene in the rendering frame, to obtain a time-warped rendering frame; and generating the video signal capable of being received by the DSI based on the time-warped rendering frame.

In an embodiment, the performing at least one of asynchronous timewarp processing and asynchronous spacewarp processing on the video signal capable of being received by the CSI, to generate a video signal capable of being received by a DSI includes: performing the asynchronous spacewarp processing on the video signal capable of being received by the CSI, to generate the video signal capable of being received by the DSI; and the performing the asynchronous spacewarp processing on the video signal capable of being received by the CSI, to generate the video signal capable of being received by the DSI includes: obtaining a current image frame in the video signal capable of being received by the CSI; obtaining a time-warped frame of a previous image frame of the current image frame; inserting the time-warped frame of the previous image frame into the current image frame, and obtaining a single blended frame based on the current image frame and the time-warped frame of the previous image frame; and generating the video signal capable of being received by the DSI based on the single blended frame.

In an embodiment, the image processing method for a virtual reality device further includes: transmitting the video signal capable of being received by the DSI to a display unit of the virtual reality device for display.

The present application further provides an image processing apparatus for a virtual reality device. The image processing apparatus for a virtual reality device includes: a HDMI, configured to receive a video signal capable of being received by a HDMI; a signal conversion unit, configured to convert the video signal capable of being received by the HDMI into a video signal capable of being received by a CSI; and a main control unit, configured to perform at least one of asynchronous timewarp processing and asynchronous spacewarp processing on the video signal capable of being received by the CSI, to generate a video signal capable of being received by a DSI.

In an embodiment, the main control unit includes: an image processing module, configured to perform at least one of the asynchronous timewarp processing and the asynchronous spacewarp processing on the video signal capable of being received by the CSI.

In an embodiment, the signal conversion unit includes a data conversion chip configured to convert the video signal capable of being received by the HDMI into the video signal capable of being received by the CSI.

In an embodiment, the main control unit includes: an image processing module, configured to perform at least one of the asynchronous timewarp processing and the asynchronous spacewarp processing on the video signal capable of being received by the CSI, to generate the video signal capable of being received by the DSI.

The present application further provides a virtual reality device. The virtual reality device includes: the image processing apparatus for a virtual reality device in the foregoing embodiment. The image processing apparatus is in a communication connection with a computer terminal.

In an embodiment, the virtual reality device is a virtual integrated head-mounted display device.

In an embodiment, the virtual reality device further includes: a DSI, where the virtual reality device receives a video signal capable of being received by a DSI through the DSI; and a display unit, where the display unit is in a communication connection with the DSI, and is configured to generate to-be-displayed content based on the video signal capable of being received by the DSI.

In an embodiment, the virtual reality device further includes: a wireless transmission device, where the wireless transmission device is wirelessly connected to the image processing apparatus.

In an embodiment, the wireless transmission device includes: a transmit apparatus, where the transmit apparatus is in a communication connection with a data source, and the transmit apparatus is configured to receive a video signal capable of being received by a HDMI transmitted by the data source, convert the video signal capable of being received by the HDMI into a millimeter-wave signal, and transmit the millimeter-wave signal; and a receive apparatus, where the receive apparatus is wirelessly connected to the transmit apparatus and the image processing apparatus, and the receive apparatus is configured to receive the millimeter-wave signal transmitted by the transmit apparatus, convert the millimeter-wave signal into the video signal capable of being received by the HDMI, and transmit the video signal to the image processing apparatus.

The image processing method for a virtual reality device provided in the present application includes: receiving, by a HDMI, a video signal capable of being received by a HDMI; converting the video signal capable of being received by the HDMI into a video signal capable of being received by a CSI; and performing at least one of asynchronous timewarp processing and asynchronous spacewarp processing on the video signal capable of being received by the CSI, to generate a video signal capable of being received by a DSI. Based on the image processing method, a displayed image of the virtual reality device has a high display frame rate. In addition, the virtual reality device may also receive and process a video signal without using the HDMI, and store video and audio data of the video signal to a greatest extent. In this way, a data loss probability is reduced, a low latency and a refresh rate of the virtual reality device during data transmission are effectively increased, and high-definition image quality is ensured.

### BRIEF DESCRIPTION OF THE DRAWINGS

FIG. 1 is a schematic flowchart of an image processing method for a virtual reality device according to an embodiment of the present application.
FIG. 2 is a schematic flowchart of an image processing method for a virtual reality device according to another embodiment of the present application.
FIG. 3 is a schematic flowchart of an image processing method for a virtual reality device according to another embodiment of the present application.
FIG. 4 is a schematic structural diagram of an image processing apparatus for a virtual reality device according to an embodiment of the present application.
FIG. 5 is a schematic structural diagram of a virtual reality device according to an embodiment of the present application.
FIG. 6 is a schematic structural diagram of a virtual reality device according to another embodiment of the present application.
FIG. 7 is a schematic structural diagram of an electronic device according to an embodiment of the present application.

Descriptions of reference signs: 101. DSI; 102. display unit; 200. computer terminal; 300. image processing apparatus; 301. HDMI; 302. signal conversion unit; 303. main control unit; 3031. image processing module; 400. wireless transmission device; 401. transmit apparatus; 402. receive apparatus; 600. electronic device; 601. processor; 602. memory; 603. input apparatus; 604. output apparatus.

### DETAILED DESCRIPTION OF THE EMBODIMENTS

In the description of the present application, "a plurality of" means at least two, for example, two or three, unless otherwise clearly and specifically limited. All the directional indications (such as upper, lower, left, right, front, back, top, and bottom) in the embodiments of the present application are merely used to explain a relative position relationship, motion situations, and the like of the components in a specific gesture (as shown in the figures). If the specific gesture changes, the directional indication also changes accordingly. In addition, the terms "include", "comprise", and any variation thereof are intended to cover non-exclusive inclusion. For example, a process, method, system, product, or device that includes a series of steps or units is not necessarily limited to those listed steps or units, but optionally further includes steps or units that are not listed, or optionally further includes steps or units that are inherent to such a process, method, system, product, or device.

In addition, the "embodiment" mentioned in this specification means that a specific feature, structure, or characteristic described in combination with the embodiment may be included in at least one embodiment of the present application. The appearances of such phrase in various places in the specification are not necessarily all referring to a same embodiment, nor are separate or alternative embodiments mutually exclusive of other embodiments. It may be explicitly or implicitly appreciated by those skilled in the art that the embodiments described herein may be combined with other embodiments.

The following clearly describes the technical solutions in the embodiments of the present application with reference to the accompanying drawings in the embodiments of the present application. Apparently, the described embodiments are merely some but not all of the embodiments of the present application. All other embodiments obtained by a person of ordinary skill in the art based on the embodiments of the present application without creative efforts fall within the protection scope of the present application.

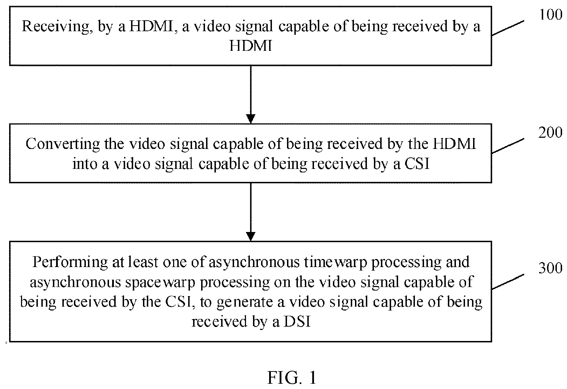

FIG. 1 is a schematic flowchart of an image processing method for a virtual reality device according to an embodiment of the present application. As shown in FIG. 1, an image processing method for a virtual reality device provided in the present application specifically includes the following steps.

Step 100: Receiving, by a HDMI, a video signal capable of being received by a HDMI.

The HDMI, in other words, the high definition multimedia interface (HDMI), is a fully digitized video and sound sending interface through which uncompressed audio and video signals may be sent, and HDMI may be configured to send both audio and video signals. The video signal capable of being received by the HDMI is a signal, with video data information, that may be received through the HDMI. A virtual reality product includes the HDMI, and receives, by the HDMI, a video signal transmitted by a data source, to receive video and audio data, so that the virtual reality product displays an image and outputs sound.

Step 200: Converting the video signal capable of being received by the HDMI into a video signal capable of being received by a CSI.

A Common System Interface (CSI) is an interface application in the Mobile Industry Processor Interface (MIPI) standard. The video signal capable of being received by the CSI is a signal, with video data information, that may be received through the CSI. The video signal capable of being received by the HDMI is converted into the video signal capable of being received by the CSI, to further process the video and audio data.

Step 300: Performing at least one of asynchronous timewarp processing and asynchronous spacewarp processing on the video signal capable of being received by the CSI, to generate a video signal capable of being received by a DSI.

The video signal capable of being received by the DSI is a signal, with video data information, that may be received through the DSI. Asynchronous timewarp (ATW) is a technology that is used to generate intermediate frames. When a sufficient frame rate cannot be maintained during a game, intermediate frames can be generated by using the asynchronous timewarp, thereby effectively reducing jitter of a game image. Asynchronous spacewarp (ASP) is a processing manner of increasing a PC frame rate by inserting a warped frame of a previous frame of a current frame into the current frame. Display serial interface (DSI) is also an interface application in the MIPI standard, and is a display interface. Asynchronous timewarp processing and asynchronous spacewarp processing are synchronously performed, so that the generated video signal capable of being received by the DSI has a high display frame rate. In addition, the virtual reality device to which the method is applied may also receive and process a video signal without using the HDMI, and store video and audio data of the video signal to a greatest extent. In this way, a data loss probability is reduced, a low latency and a refresh rate of the virtual reality device during wireless transmission are effectively increased, and high-definition image quality is ensured.

The image processing method for a virtual reality device provided in the present application includes: receiving a video signal capable of being received by a HDMI through a HDMI; converting the video signal capable of being received by the HDMI into a video signal capable of being received by a CSI; and performing at least one of asynchronous timewarp processing and asynchronous spacewarp processing on the video signal capable of being received by the CSI, to generate a video signal capable of being received by a DSI. Based on the image processing method, when the virtual reality device performs wireless transmission, a displayed image of the virtual reality device has a high display frame rate. In addition, the virtual reality device may also receive and process a video signal without using the HDMI, and store video and audio data of the video signal to a greatest extent. In this way, a data loss probability is reduced, a low latency and a refresh rate of the virtual reality device during data transmission are effectively increased, and high-definition image quality is ensured.

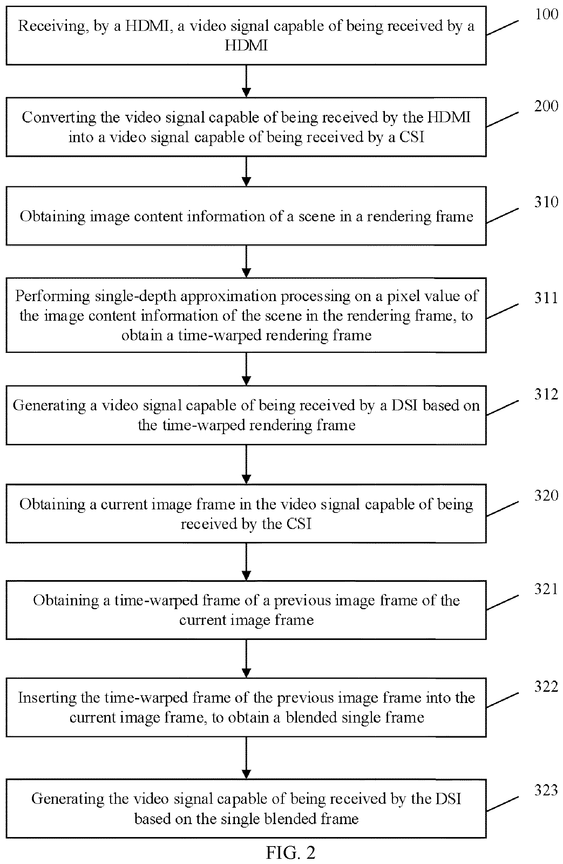

In a possible implementation, FIG. 2 is a schematic flowchart of an image processing method for a virtual reality device according to another embodiment of the present application. As shown in FIG. 2, an asynchronous timewarp processing method of Step 300 may further include the following steps.

Step 310: Obtaining image content information of a scene in a rendering frame.

Rendering is the last process of computer animation before post-production, and is also a stage at which image is finally enabled to conform to a 3D scene. The rendering frame is an screen frame presented on a display apparatus. Obtaining the image content information of the scene in the rendering frame is a premise of processing the image content information.

Step 311: Performing single-depth approximation processing on a pixel value of the image content information of the scene in the rendering frame, to obtain a time-warped rendering frame.

One or more pixel values in the rendering frame are modified through single-depth approximation processing, to generate the time-warped rendering frame. When a user uses the virtual reality device, jitter inevitably exists. Through the foregoing process, an impact on a displayed image caused by the jitter may be improved.

Specifically, as shown in FIG. 2, after Step 311, the following step is further included.

Step 312: Generating a video signal capable of being received by a DSI based on the time-warped rendering frame.

After the video signal capable of being received by the DSI is generated based on the time-warped rendering frame, the video signal capable of being received by the DSI may be received by a display unit, so that the display unit displays the video signal.

Specifically, as shown in FIG. 2, an asynchronous spacewarp processing method of Step 300 may further include the following steps.

Step 320: Obtaining a current image frame in the video signal capable of being received by the CSI.

The current image frame is a current screen frame.

Step 321: Obtaining a time-warped frame of a previous image frame of the current image frame.

The previous image frame is a previous screen frame of the current screen frame, and the time-warped frame is a warped frame obtained after the asynchronous timewarp processing is performed.

Step 322: Inserting the time-warped frame of the previous image frame into the current image frame, to obtain a single blended frame.

Inserting the time-warped frame of the previous image frame of the current image frame into the current image frame may approximately double a frame rate of a received image of a PC terminal, thereby greatly improving definition and a refresh rate of a display terminal of the virtual reality device, and ensuring a low latency between a PC and the virtual reality device during wireless transmission.

Specifically, as shown in FIG. 2, after Step 322, the following step may be further included.

Step 323: Generating the video signal capable of being received by the DSI based on the single blended frame.

After the video signal capable of being received by the DSI is generated based on the single blended frame, the display unit may receive the video signal, so that the display unit may display the video signal.

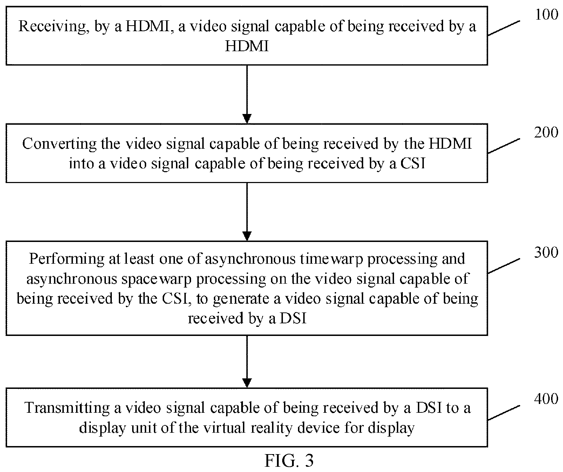

Further, FIG. 3 is a schematic flowchart of an image processing method for a virtual reality device according to another embodiment of the present application. As shown in FIG. 3, after Step 300, the image processing method may further include the following steps.

Step 400: Transmitting a video signal capable of being received by a DSI to a display unit of the virtual reality device for display.

The display unit is a graphics processing unit (GPU for short), which is also referred to as a display core, a visual processor, or a display chip, and is a microprocessor specially configured to perform an image operation on a personal computer, a workstation, a game console, and some mobile devices (such as a tablet computer and a smartphone). To-be-displayed content can be generated based on a data signal by using a display technology of the display unit.

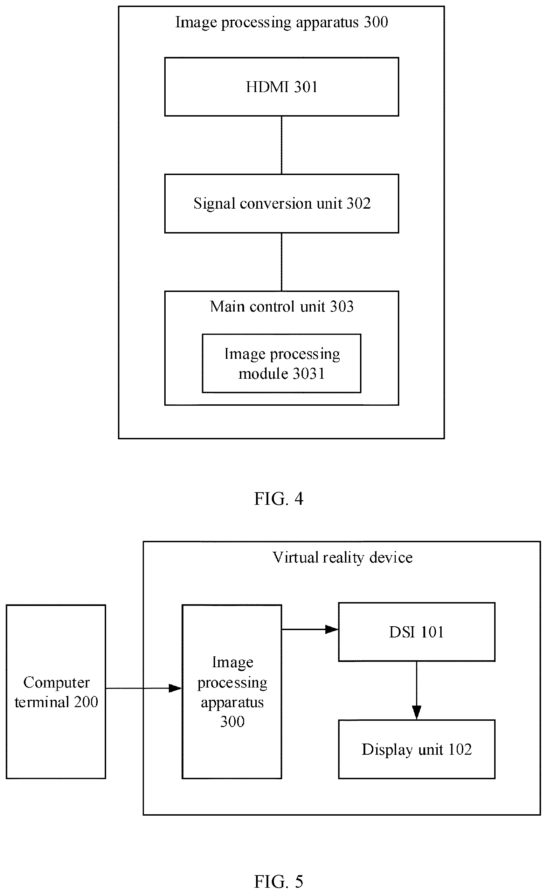

An image processing apparatus provided by the present application for wireless transmission of the virtual reality device is described below with reference to FIG. 4, and is referred to as an image processing apparatus for short.

FIG. 4 is a schematic structural diagram of an image processing apparatus for wireless transmission of a virtual reality device according to an embodiment of the present application. As shown in FIG. 4, the image processing apparatus 300 provided in the present application includes a HDMI 301, a signal conversion unit 302, and a main control unit 303. The HDMI 301 is configured to receive a video signal capable of being received by a HDMI. The signal conversion unit 302 is configured to convert the video signal capable of being received by the HDMI into a video signal capable of being received by a CSI. The main control unit 303 is configured to perform at least one of asynchronous timewarp processing and asynchronous spacewarp processing on the video signal capable of being received by the CSI.

The image processing apparatus 300 provided in the present application includes the HDMI 301, the signal conversion unit 302, and the main control unit 303. The HDMI 301 may receive a video signal capable of being received by a HDMI. The signal conversion unit 302 converts the video signal capable of being received by the HDMI into a video signal capable of being received by a CSI. The main control unit 303 performs at least one of asynchronous timewarp processing and asynchronous spacewarp processing on the video signal in CSI format, to generate a video signal capable of being received by a DSI received by the DSI 101. Based on the image processing apparatus 300, when the virtual reality device performs data transmission, a displayed image of the virtual reality device has a high display frame rate. In addition, the virtual reality device may also receive and process a video signal without using the HDMI 301, and store video and audio data of the video signal to a greatest extent. In this way, a data loss probability is reduced, a low latency and a refresh rate of the virtual reality device are effectively increased, and high-definition image quality is ensured.

Specifically, as shown in FIG. 4, the main control unit 303 of the image processing apparatus 300 may specifically include an image processing module 3031. The image processing module 3031 is configured to perform at least one of the asynchronous timewarp processing and the asynchronous spacewarp processing on the video signal capable of being received by the CSI, to increase a frame rate of a finally displayed image.

It should be noted that the signal conversion unit 302 may be a data conversion chip, a microprocessor, or the like with a signal conversion function, and is preferably a data conversion chip in the present application. Similarly, the main control unit 303 may be a main control chip. Specific implementation apparatuses of the foregoing units should be determined depending on specific application scenarios, and specific implementation apparatuses of the signal conversion unit 302 and the main control unit 303 are not further limited in the present application.

A virtual reality device provided in another embodiment of the present application is described below with reference to FIG. 5.

FIG. 5 is a schematic structural diagram of a virtual reality device according to an embodiment of the present application. As shown in FIG. 5, the virtual reality device for wireless transmission specifically includes the image processing apparatus 300 in the foregoing embodiment. The image processing apparatus 300 is in a communication connection with a computer terminal 200.

The virtual reality device provided in the present application includes the image processing apparatus 300. The image processing apparatus 300 includes a HDMI 301, a signal conversion unit 302, and a main control unit 303. The HDMI 301 may receive a video signal capable of being received by a HDMI. The signal conversion unit 302 converts the video signal capable of being received by the HDMI into a video signal capable of being received by a CSI. The main control unit 303 performs at least one of asynchronous timewarp processing and asynchronous spacewarp processing on the video signal capable of being received by the CSI, to generate a video signal capable of being received by a DSI. Based on the image processing apparatus 300, a displayed image of the virtual reality device has a high display frame rate. In addition, the virtual reality device may also receive and process a video signal without using the HDMI 301, and store video and audio data of the video signal to a greatest extent. In this way, a data loss probability is reduced, a low latency and a refresh rate of the virtual reality device during wireless transmission are effectively increased, and high-definition image quality is ensured.

In addition, the virtual reality device may further include the computer terminal 200. The computer terminal 200 may be a computer or an integrated chip, with a computer function, disposed in the virtual reality device. A specific implementation of the computer terminal 200 is not limited in the present application.

Specifically, in an embodiment of the present application, the virtual reality device may be a virtual integrated head-mounted display device. The virtual integrated head-mounted display device has a feature of integration, and integrates a wireless transmission device 400 and the computer terminal 200 that are required for virtual reality experience into one device. No data cable is needed, and a quantity of devices and a volume are small, so that user experience is further improved and product competitiveness is improved.

In a possible implementation, as shown in FIG. 5, the virtual reality device further includes a DSI 101. The device receives a video signal capable of being received by a DSI through the DSI 101, to further implement data transmission. The virtual reality device shown in FIG. 5 further includes a display unit 102. The display unit 102 is configured to display and process the video signal capable of being received by the DSI received through the DSI 101, to implement a purpose of displaying sound and an image. The display unit 102 converts a data signal into video and audio signals, thereby implementing a purpose of virtual reality, so that transmitted data can be seen by a user. The main control unit 303 in the image processing apparatus 300 is a main control unit 303 of the virtual reality device. The display unit 102 may be a display screen.

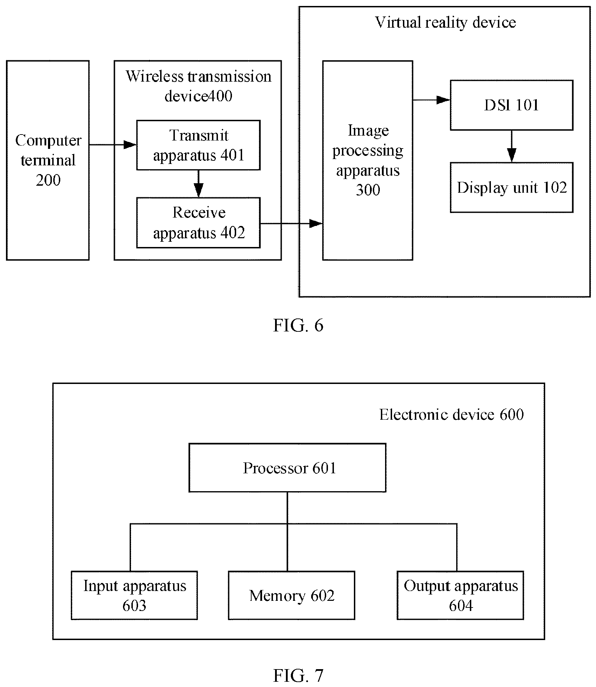

Specifically, in an embodiment, FIG. 6 is a schematic structural diagram of a virtual reality device according to another embodiment of the present application. As shown in FIG. 6, the virtual reality device may further include a wireless transmission device 400. The wireless transmission device 400 is in a communication connection with an image processing apparatus 300. The wireless transmission device 400 uses wireless transmission instead of a traditional wired transmission manner, and a computer is connected to the virtual reality device without using a data cable, so that user experience during use is effectively improved and market competitiveness of a product is further improved.

Further, as shown in FIG. 6, the wireless transmission device 400 may include a transmit apparatus 401 and a receive apparatus 402. The transmit apparatus 401 is in a communication connection with a data source, and is configured to receive a video signal capable of being received by a HDMI transmitted by the data source, convert the video signal capable of being received by the HDMI into a millimeter-wave signal, and then transmit the millimeter-wave signal, to complete reception and transmission of the signal from the data source. The receive apparatus 402 is wirelessly connected to the transmit apparatus 401, and is configured to receive the millimeter-wave signal transmitted by the transmit apparatus 401, convert the millimeter-wave signal into the video signal capable of being received by the HDMI, and then transmit the video signal capable of being received by the HDMI to the image processing apparatus 300. The image processing apparatus 300 is in a communication connection with the receive apparatus 402, and the image processing apparatus 300 further includes a HDMI 301, a signal conversion unit 302, and a main control unit 303. The HDMI 301 receives the video signal transmitted by the receive apparatus 402, and another unit converts and processes the received video signal capable of being received by the HDMI. The wireless transmission device 400 uses wireless transmission of the millimeter-wave signal instead of a traditional wired transmission manner, and a computer is connected to the virtual reality device without using a data cable, so that user experience during use is effectively improved and market competitiveness of a product is further improved. In addition, based on the image processing apparatus 300, a displayed image of the virtual reality device has a high display frame rate. In addition, the virtual reality device may also receive and process a video signal without using the HDMI 301, and store video and audio data of the video signal to a greatest extent. In this a way, a data loss probability is reduced, a low latency and a refresh rate of the virtual reality device during wireless transmission are effectively increased, and high-definition image quality is ensured.

In a possible implementation, a frequency band of a millimeter-wave signal during wireless transmission of the wireless transmission device 400 of the virtual reality device is 60 GHz. A millimeter wave in the 60 GHz frequency band has characteristics of a low delay and a high bandwidth. Therefore, using the 60 GHz frequency band as a signal transmission frequency band of the wireless transmission device 400 may make a wireless transmission process more high-speed and reliable.

The following describes an electronic device according to an embodiment of the present application with reference to FIG. 7. FIG. 7 is a schematic structural diagram of an electronic device according to an embodiment of the present application.

As shown in FIG. 7, the electronic device 600 includes one or more processors 601 and a memory 602.

The processor 601 may be a central processing unit (CPU) or a processing unit in another form that has a data processing capability and/or information execution capability, and may control another component in the electronic device 600 to perform a desired function.

The memory 601 may include one or more computer program products. The computer program product may include computer-readable storage mediums in various forms, for example, a transitory memory and/or a non-transitory memory. The transitory memory may include, for example, a random access memory (RAM) and/or a cache. The nontransitory memory may include, for example, a read-only memory (ROM), a hard disk, or a flash memory. The computer-readable storage medium may store one or more pieces of computer program information. The processor 601 may run the program information to implement the image processing method for a virtual reality device in the foregoing embodiments of the present application or another desired function.

In an example, the electronic device 600 may further include an input apparatus 603 and an output apparatus 604. These components are interconnected by using a bus system and/or a connecting mechanism in another form (not shown in the figure).

The input apparatus 603 may include, for example, a keyboard and a mouse.

The output apparatus 604 may output various information. The output apparatus 604 may include, for example, a display screen, a communication network, and a remote output device connected thereto.

Certainly, for simplicity, FIG. 7 shows only some of components in the electronic device 600 that are related to the present application, and does not show a component such as a bus, an input/output interface, or the like. In addition, depending on a specific application, the electronic device 600 may further include any other proper components.

In addition to the foregoing methods and devices, an embodiment of the present application may alternatively be a computer program product. The computer program product includes computer program information. When the computer program information is run by a processor, the processor is enabled to perform the steps, described in the specification, in the image processing method for a virtual reality device in the foregoing embodiments of the present application.

The computer program product may use any combination of one or more programming languages to write program code for performing operations in the embodiments of the present application. The programming languages include an object oriented programming language, such as Java, C++, or a conventional procedural programming language, such as the "C" language or a similar programming language. The program code may be entirely executed on a computing device of a user, partially on a computing device of a user, executed as an independent software package, partially executed on a computing device of a user and partially executed on a remote computing device, or entirely executed on a remote computing device or a server.

In addition, an embodiment of the present application may alternatively be a computer-readable storage medium. The computer-readable storage medium stores computer program information. When the computer program information is run by a processor, the processor is enabled to perform the steps, in the specification, in the image processing method for a virtual reality device in the foregoing embodiments of the present application.

The computer-readable storage medium may use any combination of one or more readable media. The readable medium may be a readable signal medium or readable storage medium. For example, the readable storage medium may include but not limited to an electronic, magnetic, optical, electromagnetic, infrared, or semiconductor system, apparatus, or means, or any combination thereof. More specific examples (a non-exhaustive list) of the readable storage medium include an electrical connection having one or more wires, a portable disk, a hard disk, a random access memory (RAM), a read-only memory (ROM), an erasable programmable read-only memory (EPROM or a flash memory), an optical fiber, a portable compact disc read-only memory (CD-ROM), an optical storage means, a magnetic storage means, or any suitable combination thereof.

A basic principle of the present application is described above with reference to the specific embodiments. However, it should be noted that, the advantages, merits, effects, and the like mentioned in the present application are only examples but not limitations, and it cannot be considered that these advantages, merits, effects, and the like must be provided in the embodiments of the present application. In addition, the specific details disclosed above are for illustrative purpose and for ease of understanding only, but are not for limitations, and are not intended to limit that the present application must be implemented using the specific details.

The block diagrams of means, apparatuses, devices, and systems related in the present application are only examples for illustrative purposes, and are not intended to require or imply that these means, apparatuses, devices, and systems must be connected, arranged, and configured in the manners shown in the block diagrams. As those skilled in the art recognize that, these means, apparatuses, devices, and systems can be connected, arranged, and configured in any manner. Words such as "including", "comprising", and "having" are open words, and refer to "including but not limited to" and may be used interchangeably with it. The words "or" and "and" used herein refer to a word "and/or", and may be used interchangeably with the word "and/or" unless the context clearly indicates otherwise. The word "such as" used herein refer to the phrase "such as but not limited to", and may be used interchangeably with the phrase "such as but not limited to".

It should be further noted that in the apparatus, device, and method of the present application, each component or step can be decomposed and/or recombined. These decompositions and/or recombinations shall be considered equivalent solutions of the present application.

The above description of the disclosed aspects is provided to enable any person skilled in the art to practice or use the present application. Various modifications to these aspects are very obvious to those skilled in the art, and the general principles defined herein may be applied to other aspects without departing from the scope of the present application. Therefore, the present application is not intended to be limited to these aspects shown herein, but extends to the widest scope that complies with the principles and novel features disclosed in the present application.

The foregoing descriptions are merely preferable embodiments of the present application, but are not intended to limit the present application. Any modification, equivalent replacement, or the like made without departing from the spirit and principle created in the present application shall fall within the protection scope created in the present application.

## Claims

1. An image processing method for a virtual reality device, comprising:
receiving (100), by a HDMI, a video signal capable of being received by a HDMI;
converting (200) the video signal capable of being received by the HDMI into a video signal capable of being received by a CSI; and
performing (300) at least one of asynchronous timewarp processing and asynchronous spacewarp processing on the video signal capable of being received by the CSI, to generate a video signal capable of being received by a DSI.

2. The image processing method for a virtual reality device according to claim 1, wherein the performing (300) at least one of asynchronous timewarp processing and asynchronous spacewarp processing on the video signal capable of being received by the CSI, to generate a video signal capable of being received by a DSI comprises: performing the asynchronous timewarp processing on the video signal capable of being received by the CSI, to generate the video signal capable of being received by the DSI; and
the performing the asynchronous timewarp processing on the video signal capable of being received by the CSI, to generate the video signal capable of being received by the DSI comprises:
obtaining (310) image content information of a scene in a rendering frame;
performing (311) single-depth approximation processing on a pixel value of the image content information of the scene in the rendering frame, to obtain a time-warped rendering frame; and
generating (312) the video signal capable of being received by the DSI based on the time-warped rendering frame.

3. The image processing method for a virtual reality device according to claim 1, wherein the performing (300) at least one of asynchronous timewarp processing and asynchronous spacewarp processing on the video signal capable of being received by the CSI, to generate a video signal capable of being received by a DSI comprises: performing the asynchronous spacewarp processing on the video signal capable of being received by the CSI, to generate the video signal capable of being received by the DSI; and
the performing the asynchronous spacewarp processing on the video signal capable of being received by the CSI, to generate the video signal capable of being received by the DSI comprises:
obtaining (320) a current image frame in the video signal capable of being received by the CSI;
obtaining (321) a time-warped frame of a previous image frame of the current image frame;
inserting (322) the time-warped frame of the previous image frame into the current image frame, and obtaining a single blended frame based on the current image frame and the time-warped frame of the previous image frame; and
generating (323) the video signal capable of being received by the DSI based on the single blended frame.

4. The image processing method for a virtual reality device according to any one of claims 1 to 3, further comprising:
transmitting (400) the video signal capable of being received by the DSI to a display unit of the virtual reality device for display.

5. An image processing apparatus for a virtual reality device, comprising:
a HDMI (301), configured to receive a video signal capable of being received by a HDMI;
a signal conversion unit (302), configured to convert the video signal capable of being received by the HDMI into a video signal capable of being received by a CSI; and
a main control unit (303), configured to perform at least one of asynchronous timewarp processing and asynchronous spacewarp processing on the video signal capable of being received by the CSI, to generate a video signal capable of being received by a DSI.

6. The image processing apparatus for a virtual reality device according to claim 5, wherein the signal conversion unit (302) comprises a data conversion chip configured to convert the video signal capable of being received by the HDMI into the video signal capable of being received by the CSI.

7. The image processing apparatus for a virtual reality device according to claim 5 or 6, wherein the main control unit (303) comprises a main control chip configured to perform at least one of asynchronous timewarp processing and asynchronous spacewarp processing on the video signal capable of being received by the CSI, to generate the video signal capable of being received by the DSI.

8. A virtual reality device, comprising:
the image processing apparatus (300) for a virtual reality device according to claim 5, wherein
the image processing apparatus (300) is in a communication connection with a computer terminal (200).

9. The virtual reality device according to claim 8, wherein the virtual reality device is a virtual integrated head-mounted display device.

10. The virtual reality device according to claim 8 or 9, wherein the virtual reality device further comprises:
a DSI (101), wherein the virtual reality device receives a video signal capable of being received by a DSI through the DSI; and
a display unit (102), wherein the display unit (102) is in a communication connection with the DSI (101) and configured to generate to-be-displayed content based on the video signal capable of being received by the DSI.

11. The virtual reality device according to any one of claims 8 to 10, wherein the virtual reality device further comprises:
a wireless transmission device (400), wherein the wireless transmission device (400) is wirelessly connected to the image processing apparatus (300).

12. The virtual reality device according to claim 11, wherein the wireless transmission device comprises:
a transmit apparatus (401), wherein the transmit apparatus is in a communication connection with a data source, and the transmit apparatus is configured to receive a video signal capable of being received by a HDMI transmitted by the data source, convert the video signal capable of being received by the HDMI into a millimeter-wave signal, and transmit the millimeter-wave signal; and
a receive apparatus (402), wherein the receive apparatus is wirelessly connected to the transmit apparatus and the image processing apparatus, and the receive apparatus is configured to receive the millimeter-wave signal transmitted by the transmit apparatus, convert the millimeter-wave signal into the video signal capable of being received by the HDMI, and transmit the video signal to the image processing apparatus.

13. The virtual reality device according to claim 12, wherein the millimeter-wave signal has a frequency band of 60 GHz.

14. An electronic device, comprising:
one or more processors (601); and
a memory (602), wherein the memory (602) stores computer program instructions, and when the computer program instructions are run by the processor (601), the processor (601) is enabled to perform the image processing method for a virtual reality device according to any one of claims 1 to 4.

15. A non-transitory computer-readable storage medium, wherein computer program instructions are stored in the non-transitory computer-readable storage medium, and the computer program instructions are used to perform the image processing method for a virtual reality device according to any one of claims 1 to 4.
